# EUROPEAN PATENT APPLICATION

(11) **EP 4 707 053 A1**
(43) Date of publication of application: **11.03.2026**
(21) Application number: 24883589.4
(22) Date of filing: 07.11.2024
(51) Int. Cl.: B60L 53/302, B60L 53/31, B60L 53/53, B60L 53/16, H01M 10/60, H01M 10/627

(54) **ENERGY STORAGE DEVICE AND TEMPERATURE REGULATION METHOD FOR ENERGY STORAGE DEVICE**

(30) Priority: 19.07.2024 CN 202410970505
(71) Applicant: Contemporary Amperex Technology Co., Limited, Jiaocheng District Ningde Fujian 352100 (CN); Contemporary Amperex Future Energy Technology (Shenzhen) Limited, Shenzhen, Guangdong 518100 (CN)
(72) Inventor: WU, Kai, Ningde, Fujian 352100 (CN); YANG, Le, Ningde, Fujian 352100 (CN); YU, Dongxu, Ningde, Fujian 352100 (CN); LI, Qing, Ningde, Fujian 352100 (CN); XING, Yanqing, Ningde, Fujian 352100 (CN); HAO, Xiaoxiao, Ningde, Fujian 352100 (CN)
(74) Representative: Gong, Jinping
(86) International application number: PCT/CN2024/130461
(87) International publication number: WO 2026/016343

(57) **Abstract**

Embodiments of this disclosure provide an energy storage device and a temperature adjustment method for energy storage device, relating to the field of battery technologies. A battery pack installed inside a cabinet is electrically connected to an energy storage interface. A charging current converter is electrically connected to the battery pack. A charging connector is electrically connected to the charging current converter. A cooling system is configured to exchange heat with the charging current converter and the charging connector. A first heat dissipation apparatus is disposed in the cooling system. A temperature adjustment system is configured to exchange heat with the battery pack, and the cooling system and the temperature adjustment system are thermally separated. A second heat dissipation apparatus is disposed in the temperature adjustment system. A controller is configured to keep the cooling system off and turn on the temperature adjustment system in a first operating mode. The controller is configured to turn on the cooling system and the temperature adjustment system in a second operating mode. The controller is configured to keep the cooling system off and turn on the temperature adjustment system in a dormant mode.

## Description

### CROSS-REFERENCE TO RELATED APPLICATIONS

This disclosure is provided based on Chinese patent application No. 202410970505.4, filed on July 19, 2024 and entitled "ENERGY STORAGE DEVICE AND TEMPERATURE ADJUSTMENT METHOD FOR ENERGY STORAGE DEVICE" and claims priority to this Chinese patent application, which is incorporated herein by reference in its entirety.

### TECHNICAL FIELD

This disclosure relates to the field of battery technologies, specifically to an energy storage device and a temperature adjustment method for energy storage device.

### BACKGROUND

The application of new energy batteries in life and industry is becoming increasingly widespread. For example, new energy vehicles equipped with batteries have been widely used, and batteries are also increasingly applied in the field of energy storage and the like. A battery pack, installed in an energy storage device, charges an electric device such as a new energy vehicle through a charging connector. The charging current converter, charging connector, and battery pack in the energy storage device generate heat and need to be cooled to some extent.

In related art, it is difficult for a structure in the energy storage device for temperature adjustment of the charging connector, charging current converter, and battery pack to meet the temperature adjustment requirements of the energy storage device in different operating modes.

### SUMMARY

In view of this, embodiments of this disclosure aim to provide an energy storage device and a temperature adjustment system for the energy storage device, to better meet the temperature adjustment requirements of the energy storage device in different operating modes.

To achieve the above purpose, the technical solution of the embodiments of this disclosure is implemented as follows.

According to a first aspect, an embodiment of this disclosure provides an energy storage device. The energy storage device at least has a first operating mode, a second operating mode, and a dormant mode. The energy storage device includes:
a cabinet, including an energy storage interface;
a battery pack installed inside the cabinet, where the battery pack is electrically connected to the energy storage interface;
a charging current converter, electrically connected to the battery pack to convert electrical energy inputted into or outputted from the battery pack;
a charging connector, electrically connected to the charging current converter to transfer the electrical energy converted by the charging current converter;
a cooling system, configured to exchange heat with the charging current converter and the charging connector;
a first heat dissipation apparatus, disposed in the cooling system;
a temperature adjustment system, configured to exchange heat with the battery pack, where the cooling system and the temperature adjustment system are thermally separated;
a second heat dissipation apparatus, disposed in the temperature adjustment system; and
a controller, configured to keep the cooling system off and turn on the temperature adjustment system in the first operating mode, the controller is configured to turn on the cooling system and the temperature adjustment system in the second operating mode, and the controller is configured to keep the cooling system off and turn on the temperature adjustment system in the dormant mode.

In the solution of this embodiment of this disclosure, the cooling system and the temperature adjustment system are thermally separated. The cooling system is configured to exchange heat with the charging current converter and the charging connector, and the temperature adjustment system is configured to exchange heat with the battery pack. While the battery pack is being charged, the battery pack operates, but the charging connector and the charging current converter do not operate, so the cooling system can be turned off and the temperature adjustment system can be turned on to adjust the temperature of the battery pack. While the charging connector is transferring the electrical energy transferred by the charging current converter, the battery pack, the charging connector, and the charging current converter all operate, and the cooling system and the temperature adjustment system can be turned on to adjust the temperatures of the battery pack, the charging connector, and the charging current converter, thus adapting to temperature adjustment for different temperature adjustment objects in different operating modes of the energy storage device.

In an embodiment, the first heat dissipation apparatus is a cooling container for accommodating a cooling medium. A space in the cooling container for accommodating the cooling medium is provided in the cooling system. The cooling container exchanges heat with air. The second heat dissipation apparatus includes a cooler and a first heat exchanger. The first heat exchanger spans between the cooler and the temperature adjustment system.

In the solution of this embodiment of this disclosure, the charging current converter is cooled through the cooling container, and the cooler cools excessive iodine. The charging current converter and the battery pack have a significant difference in temperature requirements on the cooling medium. An allowable maximum temperature of a temperature adjustment fluid correspondingly required by the charging current converter and an allowable maximum temperature of a temperature adjustment fluid correspondingly required by the charging connector are higher than an ambient temperature, to be specific, temperatures of the temperature adjustment fluid correspondingly required by the charging current converter and the temperature adjustment fluid correspondingly required by the charging connector may be higher than the ambient temperature. Therefore, the cooling container is air-cooled by surrounding ambient air flowing through the cooling container. This can basically meet the cooling requirements of the charging connector and the charging current converter, helping to reduce energy consumption. A temperature of a temperature adjustment fluid correspondingly required by the battery pack is lower than the ambient temperature. The cooler can lower the temperature of the temperature adjustment fluid in the temperature adjustment system below the ambient temperature, thus better meeting the temperature adjustment requirements of the battery pack.

In an embodiment, the cooler includes a compressor, a condenser, an expansion valve, and an evaporator that are sequentially connected head to tail. The first heat exchanger spans between the evaporator and the temperature adjustment system.

In the solution of this embodiment of this disclosure, the cooler includes the compressor, the condenser, the expansion valve, and the evaporator. A temperature of a temperature adjustment medium can be lowered quickly through the condenser, allowing the battery pack to be located in an appropriate working environment.

In an embodiment, the energy storage device further includes at least one fan. The fan is installed in the cabinet and is configured to cool the condenser and the cooling container. In a projection in an air outlet direction of the fan, a projection region of the condenser and a projection region of the cooling container are staggered.

In the solution of this embodiment of this disclosure, in the projection in the air outlet direction of the fan, the projection region of the condenser and a projection region of the first heat dissipation apparatus are staggered. While the fan is driving air to flow, heat generated by the condenser and heat generated by the first heat dissipation apparatus slightly affect each other, thereby enhancing a heat dissipation effect of the fan to some extent.

In an embodiment, in the projection in the air outlet direction of the fan, a projection region of each fan spans between the projection region of the condenser and the projection region of the cooling container.

In the solution of this embodiment of this disclosure, the projection region of the fan spans between the projection region of the condenser and the projection region of the cooling container. While the fan is cooling the condenser and the cooling container, the flowing air carrying the heat of the condenser is less likely to act repeatedly on the cooling container, thereby reducing a degree of mutual influence between the condenser and the cooling container.

In an embodiment, the condenser and the cooling container are both located above the battery pack, and/or the condenser and the cooling container are both located above the fan.

In the solution of this embodiment of this disclosure, the battery pack generates a large amount of heat while operating, so the battery pack has a large heat dissipation demand. The cooling medium in the cooling system takes the heat of the charging current converter to the cooling container, and the condenser in the temperature adjustment system also generates a large amount of heat. Hot air usually rises upwards. The condenser and the cooling container being located above the battery pack can alleviate the transfer of heat to the battery pack, thus increasing the cooling capacity of the battery pack to some extent. In addition, the cooling container and the condenser are located above the fan, the fan blows air upwards, and the generated airflow acts on the cooling container and the condenser, expelling the heat of the cooling container and the condenser upwards, thereby achieving a good cooling effect. If the cooling container is placed below the fan, the fan blows air downwards, and the generated airflow moves the heat downwards for a distance and then moves upwards to act on the cooling container and the condenser again, thereby resulting in a poor cooling effect.

In an embodiment, the energy storage device further includes a first circulating pump, and the cooling system includes:
a first circulating loop, where the first circulating pump and a cooling flow channel of the charging current converter are both connected in series with the first circulating loop; and
a cooling sub-system, where a cooling flow channel of the charging connector is disposed in the cooling sub-system; the cooling sub-system includes a first pipeline; the first pipeline is connected in series with the first circulating pump; the first pipeline is connected in parallel with the cooling flow channel of the charging current converter; and the first heat dissipation apparatus is disposed in at least one of the first circulating loop and the cooling sub-system to cool the charging connector and the charging current converter.

In the solution of this embodiment of this disclosure, the energy storage device further includes the first circulating pump; the cooling system includes the first circulating loop and the cooling sub-system; the cooling sub-system includes the first pipeline; the charging current converter is disposed in the first circulating loop; and the first heat dissipation apparatus is disposed in at least one of the first circulating loop and the cooling sub-system. Disposing the charging current converter and the charging connector in different pipelines can facilitate the arrangement of the cooling system, and the arrangement of the first circulating loop and the cooling sub-system may not be limited by relative positions of the charging current converter and the charging connector. Once the first circulating loop and the cooling sub-system are arranged, the first heat dissipation apparatus can cool the charging connector and the charging current converter. In addition, since cooling temperatures for the charging connector and the charging current converter are slightly different, the cooling sub-system and the first circulating loop can correspondingly adjust flow rates of different cooling mediums to meet different cooling requirements.

In an embodiment, the cooling sub-system further includes a second heat exchanger, a second circulating pump, and a second circulating loop; one heat exchange flow channel of the second heat exchanger is disposed in the first pipeline; the cooling flow channel of the charging connector, the second circulating pump, and another heat exchange flow channel of the second heat exchanger are connected in series with the second circulating loop; the second circulating loop is isolated from the first pipeline; and the first heat dissipation apparatus is disposed in at least one of the first circulating loop, a heat exchange channel of the second heat exchanger, and the second circulating loop.

In the solution of this embodiment of this disclosure, one heat exchange flow channel of the second heat exchanger is disposed in the first pipeline, another heat exchange flow channel is connected in series with the second circulating loop, and the first pipeline is isolated from the second circulating loop. The first circulating loop and the second circulating loop can be correspondingly provided with different cooling mediums according to characteristics of the charging current converter and the charging connector, thereby improving the adaptability of the energy storage device and providing better user experience.

In an embodiment, the temperature adjustment system includes a third circulating loop and a third circulating pump; a temperature adjustment flow channel of the battery pack and the third circulating pump are connected in series with the third circulating loop; and the second heat dissipation apparatus is disposed in the third circulating loop.

In the solution of this embodiment of this disclosure, the second heat dissipation apparatus is disposed in the third circulating loop; a temperature of the temperature adjustment medium required by the battery pack is lower than the ambient temperature; and the second heat dissipation apparatus can better lower the temperature adjustment medium in the temperature adjustment flow channel of the battery pack to an appropriate temperature.

In an embodiment, the energy storage device further includes an energy storage current converter; the energy storage current converter is electrically connected to both the battery pack and the energy storage interface to convert electrical energy inputted into or outputted from the battery pack; the temperature adjustment system further includes a second pipeline; the second pipeline is connected in parallel with the temperature adjustment flow channel of the battery pack; the second pipeline is connected in series with the third circulating pump; and the temperature adjustment flow channel of the energy storage current converter is disposed in the second pipeline.

In the solution of this embodiment of this disclosure, the second pipeline is connected in parallel with the temperature adjustment flow channel of the battery pack; the second pipeline is connected in series with the third circulating pump; and the temperature adjustment flow channel of the energy storage current converter is disposed in the second pipeline. A temperature of the cooling medium required by the energy storage current converter and a temperature of the cooling medium required by the battery pack are slightly different; the second pipeline is connected in parallel with the temperature adjustment flow channel of the battery pack; and the flow rates of the cooling mediums in the second pipeline and the temperature adjustment flow channel of the battery pack can be adjusted adaptively based on actual temperature adjustment requirements.

In an embodiment, the energy storage device further includes a valve; and the valve and the temperature adjustment flow channel of the energy storage current converter are connected in series with the second pipeline.

In the solution of this embodiment of this disclosure, the energy storage device further includes a valve; and the valve and the temperature adjustment flow channel of the energy storage current converter are connected in series. While the energy storage apparatus is charging an external electric device, the energy storage current converter is in a dormant state, and there is no need to adjust the temperature of the energy storage current converter. The valve can be closed to stop the cooling medium from flowing to the energy storage current converter, allowing the second heat dissipation apparatus and the temperature adjustment system to fully act on the battery pack, thereby enhancing the temperature adjustment effect.

In an embodiment, the temperature adjustment system further includes a heater, and the heater is disposed in the third circulating loop.

In the solution of this embodiment of this disclosure, the temperature adjustment system further includes the heater disposed in the third circulating loop. The performance of the battery pack is affected to some extent during operation in a low-temperature environment, and the heater can heat the third circulating loop to raise the temperature of the battery pack, thereby ensuring normal operation of the battery pack to some extent.

According to a second aspect, an embodiment of this disclosure provides a temperature adjustment method for energy storage device. The temperature adjustment method includes:
acquiring an operating mode of the energy storage device, where a temperature adjustment object corresponding to each operating mode at least includes a battery pack; and
at least turning on a temperature adjustment system according to the operating mode, where the temperature adjustment system is configured to exchange heat with the battery pack; a cooling system and the temperature adjustment system are thermally separated; the cooling system is configured to exchange heat with a charging current converter and a charging connector; a first heat dissipation apparatus is disposed in the cooling system; a second heat dissipation apparatus is disposed in the temperature adjustment system; the charging current converter is electrically connected to both the battery pack and the charging connector; when the operating mode is a first operating mode for charging the battery pack, the cooling system is in an off state, and the temperature adjustment system is in an on state; when the operating mode is a second operating mode in which the battery pack discharges to the charging connector through the charging current converter, the cooling system and the temperature adjustment system are both in the on state; and when the operating mode is a dormant mode, the cooling system is in the off state, and the temperature adjustment system is in the on state.

In the solution of this embodiment of this disclosure, the at least turning on a temperature adjustment system according to the operating mode can implement temperature adjustment for the charging current converter, the charging connector, and the battery pack based on the actual requirements on the operating mode. During the operation of the energy storage apparatus, there are situations where the charging current converter and the battery pack need to be cooled. Since the charging current converter and the battery pack have a significant difference in temperature requirement for the cooling medium in actual application sc enarios , the first heat dissipation apparatus and the second heat dissipation apparatus can be respectively adjusted through the cooling system and the temperature adjustment system based on different cooling requirements, thereby fully utilizing the heat dissipation apparatuses for cooling the charging current converter and the battery pack in the energy storage apparatus. Moreover, the first heat dissipation apparatus is used to cool the cooling system, and the second heat dissipation apparatus is used to adjust the temperature of the temperature adjustment system. The temperature adjustment fluid in the cooling system and the temperature adjustment fluid in the temperature adjustment system can have a significant temperature difference, allowing the energy storage device to have lower energy consumption while basically meeting the overall temperature adjustment requirements.

In an embodiment, the operating mode is the first operating mode for charging the battery pack, and the at least turning on a temperature adjustment system according to the operating mode includes:
turning on the temperature adjustment system and a cooler of the second heat dissipation apparatus while keeping the cooling system off.

In the solution of this embodiment of this disclosure, during charging of the battery pack, the battery pack generates a large amount of heat while operating, but the temperature of the cooling medium required by the battery pack is lower than the ambient temperature. The battery pack can be well cooled by turning on the cooler and the third circulating pump.

In an embodiment, the temperature adjustment object corresponding to the first operating mode further includes an energy storage current converter, and the turning on the temperature adjustment system and a cooler of the second heat dissipation apparatus while keeping the cooling system off includes:
turning on a compressor in the cooler of the second heat dissipation apparatus for refrigeration while keeping the cooling system off so as to cool a third circulating loop of the temperature adjustment system; and
turning on a third circulating pump in the temperature adjustment system while keeping the cooling system off, where a temperature adjustment flow channel of the battery pack and the third circulating pump are connected in series with the third circulating loop of the temperature adjustment system; the second heat dissipation apparatus is disposed in the third circulating loop; a temperature adjustment flow channel of the energy storage current converter is disposed in a second pipeline of the temperature adjustment system; the second pipeline is connected in parallel with the temperature adjustment flow channel of the battery pack; and the second pipeline is connected in series with the third circulating pump.

In the solution of this embodiment of this disclosure, the second pipeline is connected in parallel with the temperature adjustment flow channel of the battery pack. The flow rates of the cooling mediums in the second pipeline and the temperature adjustment flow channel of the battery pack can be adjusted adaptively based on actual temperature adjustment requirements.

In an embodiment, the turning on the temperature adjustment system and a cooler of the second heat dissipation apparatus while keeping the cooling system off further includes:
opening a valve disposed at the temperature adjustment system while keeping the cooling system off, where the valve and the temperature adjustment flow channel of the energy storage current converter are connected in series with the second pipeline of the temperature adjustment system.

In this embodiment of this disclosure, the valve is disposed in the second pipeline of the temperature adjustment system. The valve can be closed to stop the cooling medium from flowing through the temperature adjustment flow channel of the energy storage current converter, so that a temperature adjustment pressure from the second heat dissipation apparatus to the temperature adjustment system is relieved when the energy storage current converter does not need temperature adjustment, thereby reducing energy consumption to some extent.

In an embodiment, the operating mode is a second operating mode in which the battery pack discharges to the charging connector through the charging current converter; the temperature adjustment object corresponding to the second operating mode further includes the charging connector and the charging current converter; and the at least turning on a temperature adjustment system according to the operating mode includes:
turning on the cooling system, the temperature adjustment system, and the cooler of the second heat dissipation apparatus.

In the solution of this embodiment of this disclosure, during charging and discharging of the battery pack through the charging current converter, the charging connector, the charging current converter, and the battery pack are all in an operating state and generate a certain amount of heat. Based on actual use requirements, the temperature of the cooling medium required by the charging connector is approximate to the temperature of the cooling medium required by the charging current converter. Temperature adjustment can be well performed through the cooling system, the temperature adjustment system, and the cooler.

In an embodiment, the temperature adjustment object corresponding to the second operating mode further includes an energy storage current converter, and the turning on the cooling system, the temperature adjustment system, and the cooler of the second heat dissipation apparatus includes:
turning on the first circulating pump and the second circulating pump of the cooling system to cool the charging current converter and the charging connector;
turning on the compressor in the cooler of the second heat dissipation apparatus for refrigeration so as to cool the third circulating loop of the temperature adjustment system; and
turning on a third circulating pump in the temperature adjustment system, where a temperature adjustment flow channel of the battery pack and the third circulating pump are connected in series with the third circulating loop of the temperature adjustment system; the second heat dissipation apparatus is disposed in the third circulating loop; a temperature adjustment flow channel of the energy storage current converter is disposed in a second pipeline of the temperature adjustment system; the second pipeline is connected in parallel with the temperature adjustment flow channel of the battery pack; and the second pipeline is connected in series with the third circulating pump.

In the solution of this embodiment of this disclosure, the temperature of the cooling medium required by the battery pack is approximate to the temperature of the cooling medium required by the energy storage current converter. Shared use of the temperature adjustment system by the battery pack and the energy storage current converter can realize better utilization of cooling capacities of a heat dissipation system and the second heat dissipation apparatus.

In an embodiment, the turning on the cooling system, the temperature adjustment system, and the cooler of the second heat dissipation apparatus further includes:
opening a valve disposed at the temperature adjustment system, where the valve and the temperature adjustment flow channel of the energy storage current converter are connected in series with the second pipeline of the temperature adjustment system.

In the solution of this embodiment of this disclosure, the valve is disposed in the second pipeline of the temperature adjustment system. The valve can be closed to stop the cooling medium from flowing through the temperature adjustment flow channel of the energy storage current converter, so that a temperature adjustment pressure from the second heat dissipation apparatus to the temperature adjustment system is relieved when the energy storage current converter does not need temperature adjustment, thereby reducing energy consumption to some extent.

In an embodiment, the operating mode is a dormant mode, and the at least turning on a temperature adjustment system according to the operating mode includes:
turning on the temperature adjustment system while keeping the cooling system off.

In the solution of this embodiment of this disclosure, when the operating mode is a dormant mode, the cooling system is turned off and the temperature adjustment system is turned on. When the operating mode is a dormant mode, none of the battery pack, the charging connector, and the charging current converter operates. However, the battery pack has a specified temperature requirement while being turned on, and long-term exposure of the battery pack to inappropriate temperatures affects the service life of the battery pack. The battery pack can be adjusted to an appropriate temperature by turning on the temperature adjustment system.

In an embodiment, the turning on the temperature adjustment system while keeping the cooling system off includes:
turning on the third circulating pump in the temperature adjustment system while keeping the cooling system off, where the temperature adjustment flow channel of the battery pack and the third circulating pump are connected in series with the third circulating loop of the temperature adjustment system, and the second heat dissipation apparatus is disposed in the third circulating loop; and
closing the valve disposed at the temperature adjustment system while keeping the cooling system off, where the valve and the temperature adjustment flow channel of the energy storage current converter are connected in series with the second pipeline of the temperature adjustment system, the second pipeline is connected in parallel with the temperature adjustment flow channel of the battery pack, and the second pipeline is connected in series with the third circulating pump. In the solution of this embodiment of this disclosure, when the energy storage apparatus is in a dormant mode, the charging connector, the charging current converter, the energy storage current converter, and the battery pack are all in an off state. The battery pack is affected by the ambient temperature, and thus the battery pack cannot be turned on normally. The third circulating pump can be turned on to drive the cooling medium in the temperature adjustment system to flow, enabling the battery pack to be approximate to a normal operating temperature as much as possible.

In an embodiment, the temperature adjustment method further includes:
turning on a compressor in the cooler of the second heat dissipation apparatus for refrigeration while keeping the cooling system off so as to cool a third circulating loop of the temperature adjustment system.

In the solution of this embodiment of this disclosure, when the ambient temperature is higher than a normal start temperature of the battery pack, the compressor in the cooler of the second heat dissipation apparatus can be turned on for refrigeration, to enable the temperature of the battery pack to be approximate to the normal operating temperature.

In an embodiment, the temperature adjustment method further includes:
turning on a heater disposed in the third circulating loop while keeping the cooling system off so as to heat the third circulating loop of the temperature adjustment system.

In the solution of this embodiment of this disclosure, when the ambient temperature is lower than the normal start temperature of the battery pack, the heater disposed in the third circulating loop can be turned on to heat the cooling medium in the third circulating loop, to enable the temperature of the battery pack to be approximate to the normal operating temperature.

In an embodiment, the temperature adjustment method further includes:
turning on a fan for heat dissipation.

In the solution of this embodiment of this disclosure, the fan is turned on to cool the first heat dissipation apparatus and the second heat dissipation apparatus and to drive the air to flow quickly, such that the heat in the energy storage device is quickly taken away from the cabinet, allowing for a large cooling capacity of the energy storage apparatus.

### Effects of the invention:

In the solutions of the embodiments of this disclosure, the cooling system and the temperature adjustment system are thermally separated. The cooling system is configured to exchange heat with the charging current converter and the charging connector, and the temperature adjustment system is configured to exchange heat with the battery pack. While the battery pack is being charged, the battery pack operates, but the charging connector and the charging current converter do not operate, so the cooling system can be turned off and the temperature adjustment system can be turned on to adjust the temperature of the battery pack. While the charging connector is transferring the electrical energy transferred by the charging current converter, the battery pack, the charging connector, and the charging current converter all operate, and the cooling system and the temperature adjustment system can be turned on to adjust the temperatures of the battery pack, the charging connector, and the charging current converter, thus adapting to temperature adjustment for different temperature adjustment objects in different operating modes of the energy storage device.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments, but are not construed as a limitation on this disclosure. Moreover, throughout the accompanying drawings, the same reference signs represent the same parts. In the accompanying drawings:
FIG. 1 is a structural diagram of an energy storage device according to a first embodiment of this disclosure;
FIG. 2 is a structural diagram of an energy storage device according to a second embodiment of this disclosure;
FIG. 3 is a structural diagram of an energy storage device according to a third embodiment of this disclosure;
FIG. 4 is a schematic structural diagram of an energy storage device according to a fourth embodiment of this disclosure;
FIG. 5 is a structural diagram of an energy storage device according to a fifth embodiment of this disclosure;
FIG. 6 is a schematic flowchart of a temperature adjustment method according to a sixth embodiment of this disclosure;
FIG. 7 is a schematic flowchart of a temperature adjustment method according to a seventh embodiment of this disclosure;
FIG. 8 is a schematic flowchart of a temperature adjustment method according to an eighth embodiment of this disclosure;
FIG. 9 is a schematic flowchart of a temperature adjustment method according to a ninth embodiment of this disclosure;
FIG. 10 is a schematic flowchart of a temperature adjustment method according to a tenth embodiment of this disclosure;
FIG. 11 is a schematic flowchart of a temperature adjustment method according to an eleventh embodiment of this disclosure; and
FIG. 12 is a schematic flowchart of a temperature adjustment method when an energy storage apparatus is in a dormant mode according to an embodiment of this disclosure.

### Description of reference signs:

1. cabinet; 2. battery pack; 3. energy storage current converter; 4. charging current converter; 5. charging connector; 6. cooling system; 60. first circulating loop; 61. cooling sub-system; 610. first pipeline; 611. second heat exchanger; 612. second circulating pump; 613. second circulating loop; 7. first heat dissipation apparatus; 8. temperature adjustment system; 80. third circulating loop; 81. third circulating pump; 82. second pipeline; 83. heater; 9. second heat dissipation apparatus; 90. cooler; 900. compressor; 901. condenser; 902. expansion valve; 903. evaporator; 91. first heat exchanger; 10. fan; 11. first circulating pump; and 12. valve.

### DESCRIPTION OF EMBODIMENTS

The following describes in detail the embodiments of technical solutions of this disclosure with reference to the accompanying drawings. The following embodiments are merely used to describe the technical solutions of this disclosure more clearly, and are therefore merely used as examples and do not constitute any limitation on the protection scope of this disclosure.

Unless otherwise defined, all technical and scientific terms used herein shall have the same meanings as commonly understood by persons skilled in the art to which this disclosure relates. The terms used herein are intended to merely describe the specific embodiments rather than to limit this disclosure. The terms "include", "comprise", and any other variations thereof in the specification, claims and brief description of drawings of this disclosure are intended to cover non-exclusive inclusions.

In the description of the embodiments of this disclosure, the technical terms "first", "second", "third", and the like are merely intended to distinguish between different objects, and shall not be understood as any indication or implication of relative importance or any implicit indication of the number, sequence or primary-secondary relationship of the technical features indicated. In the description of the embodiments of this disclosure, "a plurality of" means at least two unless otherwise specifically stated.

In this specification, reference to "embodiment" means that specific features, structures or characteristics described with reference to the embodiment may be incorporated in at least one embodiment of this disclosure. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the descriptions of the embodiments of this disclosure, it should be noted that orientations or positional relationships indicated by the technical terms "top", "bottom", "up", "down", and the like are based on the orientation or positional relationships shown in the accompanying drawings, and are merely for ease and brevity of description of the embodiments of this disclosure rather than indicating or implying that the means or elements mentioned must have specific orientations or must be constructed or manipulated according to specific orientations, and therefore shall not be construed as any limitation on the embodiments of this disclosure.

In the description of the embodiments of this disclosure, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in the embodiments of this disclosure as appropriate to specific situations.

In the description of the embodiments of this disclosure, unless otherwise specified and defined explicitly, the technical term "contact" should be understood in its general sense. It may refer to a direct contact or an indirect contact through an intermediate medium, and may be a contact between two elements with essentially no interaction force or a contact between two elements with an interaction force.

In related art, a battery pack of an energy storage device supplies power to a charging connector through a charging current converter, enabling the charging connector to supply power to electric devices such as electric vehicles. An external power supply charges the battery pack to enable the battery pack to store electrical energy. In different operating modes, not all the charging current converter, the charging connector, and the battery pack need temperature adjustment. However, during operating of an energy storage device in the related art, a temperature adjustment fluid flows through all the charging current converter, the charging connector, and the battery pack for temperature adjustment, making it difficult to specifically adapt to the temperature adjustment requirements of the energy storage device in different operating modes.

For implementation of this disclosure, a first heat dissipation apparatus 7 and a cooling system 6 are provided to cool a charging current converter 4,and a second heat dissipation apparatus 9 and a temperature adjustment system 8 are provided to adjust a temperature of a battery pack 2, where the temperature adjustment system 8 and the cooling system 6 are thermally separated and difficult to affect each other. The first heat dissipation apparatus 7 and the second heat dissipation apparatus 9 can be adjusted according to a temperature of a cooling medium required by the charging current converter 4 and a temperature of a cooling medium required by the battery pack 2, respectively, helping to reduce energy consumption. The cooling system 6 and the energy storage system are thermally separated from each other, so that temperature adjustment is performed on different temperature adjustment objects in different operating modes, allowing the energy storage device to well adapt to the different operating modes.

The battery pack 2 refers to a device capable of outputting electrical energy. For example, electrical energy can be outputted by a battery pack 2 formed by battery cells. For example, electrical energy can be outputted by a battery pack 2 formed by a battery module formed by battery cells.

This disclosure further provides a battery pack 2. The battery pack 2 includes a mounting housing and a battery unit. The battery unit is disposed inside the mounting housing.

In this embodiment of this disclosure, the battery cell may be a secondary battery. The secondary battery refers to a battery cell whose active substance can be activated for reuse through charging after the battery cell is discharged.

In this embodiment of this disclosure, the battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead storage battery, or the like. This is not limited in this embodiment of this disclosure.

For example, the battery cell includes a housing and an electrode assembly, where the electrode assembly is disposed inside the housing.

In some embodiments, the housing may be a sealed structure or a non-sealed structure. In an example, when the housing is a non-sealed structure, the housing has a function of protecting the electrode assembly; a sealed bag is disposed between the housing and the electrode assembly; and the sealed bag is configured to package the electrode assembly and the electrolyte. Specifically, the sealed bag may be a bag-shaped insulating member or aluminum-plastic film.

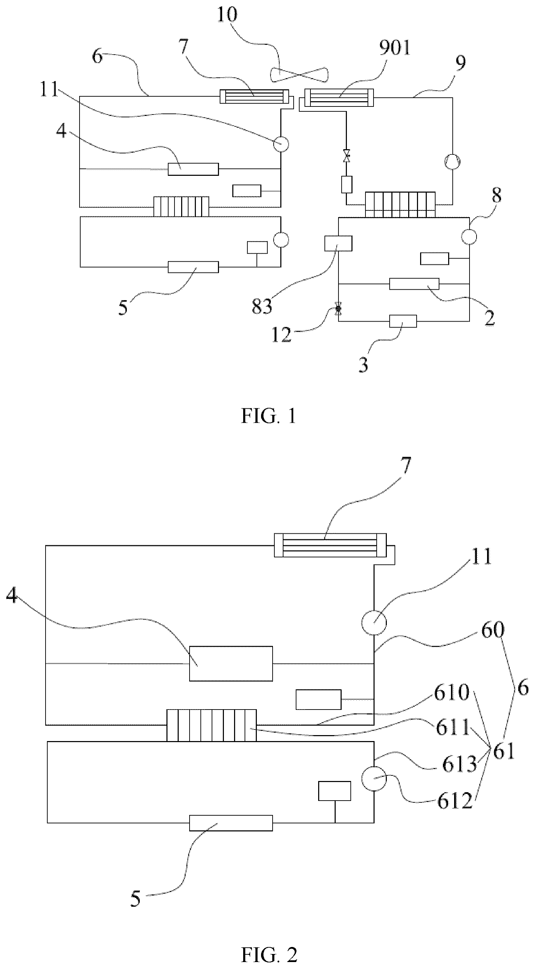

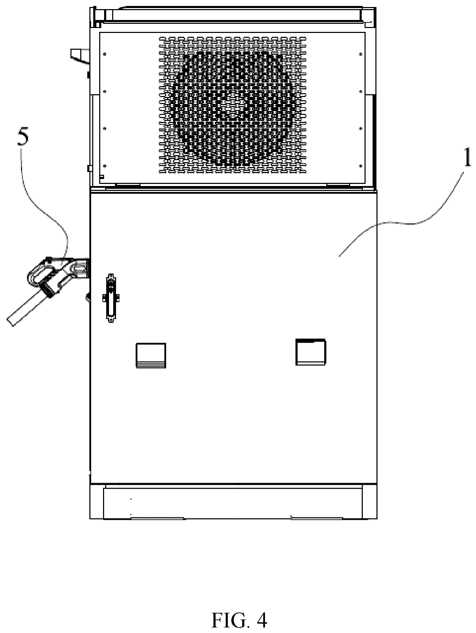

This disclosure further provides an energy storage device. Referring to FIG. 1 to FIG. 5, the energy storage device at least has a first operating mode, a second operating mode, and a dormant mode. The energy storage device includes a cabinet 1, a battery pack 2, a charging current converter 4, a charging connector 5, a cooling system 6, a first heat dissipation apparatus 7, a temperature adjustment system 8, a second heat dissipation apparatus 9, a fan 10, and a controller. The cabinet 1 has an energy storage interface. The battery pack 2 is installed inside the cabinet 1, and the battery pack 2 is electrically connected to the energy storage interface. The charging current converter 4 is electrically connected to the battery pack 2 to convert electrical energy inputted into or outputted from the battery pack 2. The charging connector 5 is electrically connected to the charging current converter 4 to transfer the electrical energy converted by the charging current converter 4. The cooling system 6 is configured to exchange heat with the charging current converter 4. The first heat dissipation apparatus 7 is disposed in the cooling system 6. The temperature adjustment system 8 is configured to exchange heat with the battery pack 2, where the cooling system 6 and the temperature adjustment system 8 are thermally separated. The second heat dissipation apparatus 9 is disposed in the temperature adjustment system 8. The controller is configured to keep the cooling system 6 off and turn on the temperature adjustment system 8 in the first operating mode. The controller is configured to turn on the cooling system 6 and the temperature adjustment system 8 in the second operating mode. The controller is configured to keep the cooling system 6 off and turn on the temperature adjustment system 8 in the dormant mode.

The charging current converter 4 refers to a current converter electrically connected between the battery pack 2 and the charging connector 5, and is configured to convert the electrical energy outputted from or inputted into the battery pack 2.

For example, the energy storage device further includes an energy storage current converter 3, and the energy storage current converter 3 is electrically connected to both the battery pack 2 and the energy storage interface.

The energy storage current converter 3 refers to a current converter electrically connected between an external power supply and the battery pack 2, and is configured to convert the electrical energy outputted from or inputted into the battery pack 2.

The current converter refers to an electric apparatus that changes the voltage, frequency, phase number, and other electric quantities or characteristics of a power system. The charging connector 5 refers to an electric apparatus configured to be electrically connected to an electric device, to allow the electrical energy inside the battery pack 2 to be transferred to the electric device.

For example, the charging connector 5 is a charging gun.

For example, the charging connector 5 is a structure for charging new energy vehicles.

For example, the energy storage device is a new energy charging pile.

It should be noted that the cooling system 6 is an adjustment system having a cooling function.

It should be noted that the temperature adjustment system 8 is an adjustment system having a cooling function and a heating function.

It should be noted that different adjustment systems are thermally separated, to be specific, different adjustment systems do not exchange heat through a heat exchanger, and no heat exchanger does not span between two different adjustment systems.

It should be noted that in one adjustment system, when flow channels in this one system communicate with each other, a cooling medium can circularly flow to the flow channels in this one adjustment system; and when flow channels isolated from each other are present in one system, the isolated flow channels are disposed in a heat exchanger, the heat exchanger spans between the isolated flow channels, and cooling mediums in the isolated flow channels can exchange heat through the heat exchanger. In other words, in one adjustment system, the flow channels can communicate with each other, and if there are isolated flow channels, heat is exchanged through the heat exchanger.

It should be explained that in two isolated flow channels, a cooling medium in any flow channel does not flow to the other flow channel isolated therefrom.

It should be explained that the heat exchanger is a structure configured to exchange heat between different isolated flow channels.

In the solution of this embodiment of this disclosure, the cooling system 6 and the temperature adjustment system 8 are thermally separated. The cooling system 6 is configured to exchange heat with the charging current converter 4 and the charging connector 5, and the temperature adjustment system 8 is configured to exchange heat with the battery pack 2. While the battery pack 2 is being charged, the battery pack 2 operates, but the charging connector 5 and the charging current converter 4 do not operate, so the cooling system 6 can be turned off and the temperature adjustment system 8 can be turned on to adjust the temperature of the battery pack 2. While the charging connector 5 is transferring the electrical energy transferred by the charging current converter 4, the battery pack 2, the charging connector 5, and the charging current converter 4 all operate, and the cooling system 6 and the temperature adjustment system 8 can be turned on to adjust the temperatures of the battery pack 2, the charging connector 5, and the charging current converter 4, thus adapting to temperature adjustment for different temperature adjustment objects in different operating modes of the energy storage device.

For example, the cooling system 6 and the temperature adjustment system 8 are thermally separated; the first heat dissipation apparatus 7 is used to cool the cooling system 6; the second heat dissipation apparatus 9 is used to adjust the temperature of the temperature adjustment system 8; and a temperature adjustment fluid in the cooling system 6 and a temperature adjustment fluid in the temperature adjustment system 8 can have a significant temperature difference, allowing the energy storage device to have lower energy consumption while basically meeting the overall temperature adjustment requirements.

In an embodiment, referring to FIG. 1 and FIG. 2, the first heat dissipation apparatus 7 is a cooling container for accommodating a cooling medium. A space in the cooling container for accommodating the cooling medium is provided in the cooling system 6. The cooling container exchanges heat with air. The second heat dissipation apparatus 9 includes a cooler 90 and a first heat exchanger 91. The first heat exchanger 91 spans between the cooler 90 and the temperature adjustment system 8.

The first heat exchanger 91 refers to a heat exchanger capable of exchanging heat between the cooler 90 and the temperature adjustment system 8.

The cooler 90 refers to a structure capable of implementing forced cooling.

During the operation of the energy storage device, a temperature of a temperature adjustment fluid correspondingly required by the battery pack 2 is lower than an ambient temperature, and a maximum allowable temperature of a temperature adjustment fluid correspondingly required by the charging current converter 4 and a maximum allowable temperature of a temperature adjustment fluid correspondingly required by the charging connector 5 are higher than the ambient temperature.

For example, the temperature of the temperature adjustment fluid correspondingly required by the battery pack 2 is approximately 18°C to 20°C. When the ambient temperature is approximately 45°C, the maximum allowable temperature of the temperature adjustment fluid correspondingly required by the charging current converter 4 is approximately 63°C to 65°C. When the ambient temperature is approximately 45°C, the maximum allowable temperature of the temperature adjustment fluid correspondingly required by the charging connector 5 is approximately 85°C.

In the solution of this embodiment of this disclosure, the charging current converter 4 is cooled through the cooling container, and the cooler 90 cools excessive iodine. The charging current converter 4 and the battery pack 2 have a significant difference in temperature requirement for the cooling medium. The allowable maximum temperature of the temperature adjustment fluid correspondingly required by the charging current converter 4 and the allowable maximum temperature of the temperature adjustment fluid correspondingly required by the charging connector 5 are higher than the ambient temperature, to be specific, the temperatures of the temperature adjustment fluid correspondingly required by the charging current converter 4 and the temperature adjustment fluid correspondingly required by the charging connector 5 may be higher than the ambient temperature. Therefore, the cooling container is air-cooled by surrounding ambient air flowing through the cooling container. This can basically meet the cooling requirements of the charging connector 5 and the charging current converter 4, helping to reduce energy consumption. The temperature of the temperature adjustment fluid correspondingly required by the battery pack 2 is lower than the ambient temperature. The cooler 90 can lower the temperature of the temperature adjustment fluid in the temperature adjustment system 8 below the ambient temperature, thus better meeting the temperature adjustment requirements of the battery pack 2.

It can be understood that this embodiment of this disclosure is not limited to the case in which the first heat dissipation apparatus 7 is the cooling container for accommodating the cooling medium. For example, the first heat dissipation apparatus 7 is the cooler 90.

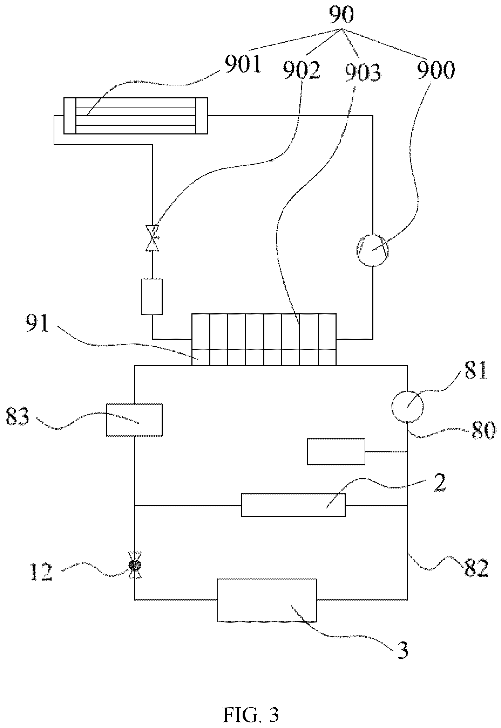

In an embodiment, referring to FIG. 3, the cooler 90 includes a compressor 900, a condenser 901, an expansion valve 902, and an evaporator 903 that are sequentially connected head to tail, and the first heat exchanger 91 spans between the evaporator 903 and the temperature adjustment system 8.

The compressor 900 refers to a structure that compresses and drives a refrigerant in a refrigerant loop.

The condenser 901 refers to a structure that can convert gas or vapor into liquid, transferring heat in a pipeline to the nearby air quickly.

The evaporator 903 refers to a structure that achieves a purpose of cooling by utilizing a liquid low-temperature refrigerant which is likely to evaporate into vapor and absorb the heat of a cooled medium under a low pressure.

The expansion valve 902 refers to a structure that achieves a cooling effect by utilizing a liquid refrigerant which is throttled into a low-temperature low-pressure wet vapor and then absorbs heat in the evaporator 903.

A projection region of the condenser 901 and a projection region of the cooling container are staggered, meaning that there are no overlapping parts between the projection region of the condenser 901 and the projection region of the cooling container, but contour lines of the projection regions can overlap.

In the solution of this embodiment of this disclosure, the cooler 90 includes the compressor 900, the condenser 901, the expansion valve 902, and the evaporator 903. A temperature of a temperature adjustment medium can be lowered quickly through the condenser 901, allowing the battery pack 2 to be located in an appropriate working environment.

It can be understood that the type of the cooler 90 is not limited in this embodiment of this disclosure. For example, the cooler 90 is a semiconductor cooler 90, and the semiconductor cooler 90 includes a thermoelectric module, a heat radiator, and an electrode.

In an embodiment, the energy storage device further includes at least one fan 10. The fan 10 is installed in the cabinet 1. The fan 10 is configured to cool the condenser 901 and the cooling container. In a projection in an air outlet direction of the fan 10, a projection region of the condenser 901 and a projection region of the cooling container are staggered.

In the solution of this embodiment of this disclosure, in the projection in the air outlet direction of the fan 10, the projection region of the condenser 901 and a projection region of the first heat dissipation apparatus 7 are staggered. While the fan 10 is driving air to flow, heat generated by the condenser 901 and heat generated by the first heat dissipation apparatus 7 slightly affect each other, thereby enhancing a heat dissipation effect of the fan 10 to some extent.

It can be understood that this embodiment of this disclosure is not limited to the projection in the air outlet direction of the fan 10, where the projection region of the condenser 901 and the projection region of the cooling container are staggered. For example, in the projection in the air outlet direction of the fan 10, the projection region of the condenser 901 and the projection region of the cooling container at least partially overlap.

In an embodiment, referring to FIG. 1, in the projection in the air outlet direction of the fan 10, a projection region of each fan 10 spans between the projection region of the condenser 901 and the projection region of the cooling container.

The projection region of the fan 10 spanning between the projection region of the condenser 901 and the projection region of the cooling container means that the projection region of the fan 10 overlaps with both the projection region of the condenser 901 and the projection region of the cooling container.

In the solution of this embodiment of this disclosure, the projection region of the fan 10 spans between the projection region of the condenser 901 and the projection region of the cooling container. While the fan 10 is cooling the condenser 901 and the cooling container, the flowing air carrying the heat from the condenser 901 is less likely to act repeatedly on the cooling container, thereby reducing a degree of mutual influence between the condenser 901 and the cooling container.

It can be understood that an arrangement manner of the fan 10, the condenser 901, and the cooling container is not limited in this embodiment of this disclosure. For example, in the air outlet direction of the fan 10, the fan 10, the condenser 901, and the cooling container are arranged in sequence.

In an embodiment, the condenser 901 and the cooling container are both located above the battery pack 2, and/or the condenser 901 and the cooling container are both located above the fan 10.

In the solution of this embodiment of this disclosure, the battery pack 2 generates a large amount of heat while operating, so the battery pack 2 has a large heat dissipation demand. The cooling medium in the cooling system 6 takes the heat of the charging current converter 4 to the cooling container, and the condenser 901 in the temperature adjustment system 8 also generates a large amount of heat. Hot air usually rises upwards. The condenser 901 and the cooling container being located above the battery pack 2 can alleviate the transfer of heat to the battery pack 2, thus increasing the cooling capacity of the battery pack 2 to some extent. In addition, the cooling container and the condenser 901 are located above the fan 10, the fan 10 blows air upwards, and the generated airflow acts on the cooling container and the condenser 901, expelling the heat of the cooling container and the condenser 901 upwards, thereby achieving a good cooling effect. If the cooling container is placed below the fan 10, the fan 10 blows air downwards, and the generated airflow moves the heat downwards for a distance and then moves upwards to act on the cooling container and the condenser 901 again, thereby resulting in a poor cooling effect.

It can be understood that this embodiment of this disclosure is not limited to the case in which the cooling container and the condenser 901 are both located above the battery pack 2. For example, the cooling container and/or the condenser 901 are located below the battery pack 2.

It can be understood that this embodiment of this disclosure is not limited to the case in which the cooling container and the condenser 901 are both located above the fan 10. For example, the cooling container and/or the condenser 901 are located below or beside the fan 10.

In an embodiment, referring to FIG. 1 and FIG. 2, the energy storage device further includes a first circulating pump 11, and the cooling system 6 includes:
a first circulating loop 60, where the first circulating pump 11 and a cooling flow channel of the charging current converter 4 are both connected in series with the first circulating loop 60; and
a cooling sub-system 61, where a cooling flow channel of the charging connector 5 is disposed in the cooling sub-system 61; the cooling sub-system 61 includes a first pipeline 610; the first pipeline 610 is connected in series with the first circulating pump 11; the first pipeline 610 is connected in parallel with the cooling flow channel of the charging current converter 4; and the first heat dissipation apparatus 7 is disposed in at least one of the first circulating loop 60 and the cooling sub-system 61 to cool the charging connector 5 and the charging current converter 4.

For example, the first circulating pump 11 is an electronic pump.

In the solution of this embodiment of this disclosure, the energy storage device further includes the first circulating pump 11; the cooling system 6 includes the first circulating loop 60 and the cooling sub-system 61; the cooling sub-system 61 includes the first pipeline 610; the charging current converter 4 is disposed in the first circulating loop 60; and the first heat dissipation apparatus 7 is disposed in at least one of the first circulating loop 60 and the cooling sub-system 61. Disposing the charging current converter 4 and the charging connector 5 in different pipelines can facilitate the arrangement of the cooling system 6, and the arrangement of the first circulating loop 60 and the cooling sub-system 61 may not be limited by relative positions of the charging current converter 4 and the charging connector 5. Once the first circulating loop 60 and the cooling sub-system 61 are arranged, the first heat dissipation apparatus 7 can cool the charging connector 5 and the charging current converter 4. In addition, since cooling temperatures for the charging connector 5 and the charging current converter 4 are slightly different, the cooling sub-system 61 and the first circulating loop 60 can correspondingly adjust flow rates of different cooling mediums to meet different cooling requirements.

It can be understood that this embodiment of this disclosure is not limited to the case in which the cooling system 6 includes the first circulating loop 60 and the cooling sub-system 61, where the charging current converter 4 is disposed in the first circulating loop 60, and the charging connector 5 is disposed in the cooling sub-system 61. For example, the cooling flow channel of the charging connector 5 is disposed in the first pipeline 610, and the cooling flow channel of the charging current converter 4 is disposed in the first circulating loop 60.

In an embodiment, referring to FIG. 2, the cooling sub-system 61 further includes a second heat exchanger 611, a second circulating pump 612, and a second circulating loop 613; one heat exchange flow channel of the second heat exchanger 611 is disposed in the first pipeline 610; the cooling flow channel of the charging connector 5, the second circulating pump 612, and another heat exchange flow channel of the second heat exchanger 611 are connected in series with the second circulating loop 613; the second circulating loop 613 is isolated from the first pipeline 610; and the first heat dissipation apparatus 7 is disposed in at least one of the first circulating loop 60, a heat exchange channel of the second heat exchanger 611, and the second circulating loop 613.

The second heat exchanger 611 refers to a heat exchanger capable of exchanging heat between the first pipeline 610 and the second circulating loop 613.

The second circulating loop 613 is isolated from the first pipeline 610, meaning that a cooling medium in the first pipeline 610 does not flow into the second circulating loop 613, and a cooling medium in the second circulating loop 613 does not flow into the first pipeline 610.

In the solution of this embodiment of this disclosure, one heat exchange flow channel of the second heat exchanger 611 is disposed in the first pipeline 610, another heat exchange flow channel is connected in series with the second circulating loop 613, and the first pipeline 610 is isolated from the second circulating loop 613. The first circulating loop 60 and the second circulating loop 613 can be correspondingly provided with different cooling mediums according to characteristics of the charging current converter 4 and the charging connector 5, thereby improving the adaptability of the energy storage device and providing better user experience.

It can be understood that this embodiment of this disclosure is not limited to the case in which the first pipeline 610 is isolated from the second circulating loop 613. For example, the second circulating loop 613 communicates with the first pipeline 610, and the charging connector 5 and the charging current converter 4 are connected in parallel.

In an embodiment, the cooling medium in the first circulating loop 60 is water, and the cooling medium in the second circulating loop 613 is oil.

For example, the cooling medium in the first circulating loop 60 may alternatively be a water-ethylene glycol solution.

For example, the cooling medium in the second circulating loop 613 is silicone oil.

In the solution of this embodiment of this disclosure, the cooling medium in the first circulating loop 60 is water. The charging current converter 4 requires a large cooling capacity, and water has a large specific heat capacity, which can better cool the charging current converter 4 to better meet the cooling requirements of the charging current converter 4. The cooling medium in the second circulating loop 613 is oil, which has low electrical conductivity. The energy storage device needs to be discharged through the charging connector 5. During the process of cooling the charging connector 5, the risk of electric shock or short circuit caused by leakage of the cooling medium is mitigated, making the energy storage device safer.

It can be understood that this embodiment of this disclosure is not limited to the case in which the cooling medium in the first circulating loop 60 is water, and the cooling medium in the second circulating loop 613 is oil. For example, the cooling mediums in the first circulating loop 60 and the second circulating loop 613 are both water.

In an embodiment, referring to FIG. 3, the temperature adjustment system 8 includes a third circulating loop 80 and a third circulating pump 81; a temperature adjustment flow channel of the battery pack 2 and the third circulating pump 81 are connected in series with the third circulating loop 80; and the second heat dissipation apparatus 9 is disposed in the third circulating loop 80.

For example, the first heat exchanger 91 includes a temperature adjustment pipeline and heat exchange fins connected to each other. The temperature adjustment pipeline is disposed in the heat dissipation flow channel, and the heat exchange fins exchange heat with the evaporator 903 for heat dissipation.

In the solution of this embodiment of this disclosure, the second heat dissipation apparatus 9 is disposed in the third circulating loop 80; a temperature of the temperature adjustment medium required by the battery pack 2 is lower than the ambient temperature; and the second heat dissipation apparatus 9 can better lower the temperature adjustment medium in the temperature adjustment flow channel of the battery pack 2 to an appropriate temperature.

In an embodiment, the energy storage device further includes an energy storage current converter 3; the energy storage current converter 3 is electrically connected to both the battery pack 2 and the energy storage interface to convert electrical energy inputted into or outputted from the battery pack 2; the temperature adjustment system 8 further includes a second pipeline 82; the second pipeline 82 is connected in parallel with the temperature adjustment flow channel of the battery pack 2; the second pipeline 82 is connected in series with the third circulating pump 81; and the temperature adjustment flow channel of the energy storage current converter 3 is disposed in the second pipeline 82.

In the solution of this embodiment of this disclosure, the second pipeline 82 is connected in parallel with the temperature adjustment flow channel of the battery pack 2; the second pipeline 82 is connected in series with the third circulating pump 81; and the temperature adjustment flow channel of the energy storage current converter 3 is disposed in the second pipeline 82. A temperature of the cooling medium required by the energy storage current converter 3 and a temperature of the cooling medium required by the battery pack 2 are slightly different; the second pipeline 82 is connected in parallel with the temperature adjustment flow channel of the battery pack 2; and the flow rates of the cooling mediums in the second pipeline 82 and the temperature adjustment flow channel of the battery pack 2 can be adjusted adaptively based on actual temperature adjustment requirements.

It can be understood that whether the energy storage device includes the energy storage current converter 3 is not limited in this embodiment of this disclosure. For example, the energy storage current converter 3 may be disposed on a power grid side, where a power grid is converted into direct current by the energy storage current converter 3 and then enters the battery pack.

It can be understood that a temperature adjustment manner for the energy storage current converter 3 is not limited in this disclosure. For example, the temperature adjustment flow channel of the energy storage current converter 3 is disposed in the third circulating loop 80.

In an embodiment, the energy storage device further includes a valve 12; and the valve 12 and the temperature adjustment flow channel of the energy storage current converter 3 are connected in series with the second pipeline 82.

For example, the valve 12 is an electronic valve 12.

For example, when the valve 12 is in an open state, the temperature adjustment flow channel of the energy storage current converter 3 communicates with the third circulating loop 80. When the valve 12 is in a closed state, the temperature adjustment flow channel of the energy storage current converter 3 and the third circulating loop 80 are disconnected.

In the solution of this embodiment of this disclosure, the energy storage device further includes the valve 12; and the valve 12 and the temperature adjustment flow channel of the energy storage current converter 3 are connected in series. While the energy storage apparatus is charging an external electric device, the energy storage current converter 3 is in a dormant state, and there is no need to adjust the temperature of the energy storage current converter 3. The valve 12 can be closed to stop the cooling medium from flowing to the energy storage current converter 3, allowing the second heat dissipation apparatus 9 and the temperature adjustment system 8 to fully act on the battery pack 2, thereby enhancing the temperature adjustment effect.

It can be understood that whether the valve 12 is provided is not limited in this embodiment of this disclosure.

It can be understood that when the energy storage device is not provided with the energy storage current converter 3, the energy storage device may not be provided with the valve 12, and the temperature adjustment system 8 adjusts only the temperature of the battery pack 2.

In an embodiment, the temperature adjustment system 8 further includes a heater 83. The heater 83 is disposed in the third circulating loop 80.

For example, the heater 83 is a heating resistor.

In the solution of this embodiment of this disclosure, the temperature adjustment system 8 further includes the heater 83 disposed in the third circulating loop 80. The performance of the battery pack 2 is affected to some extent during operation in a low-temperature environment, and the heater 83 can heat the third circulating loop 80 to raise the temperature of the battery pack 2, thereby ensuring normal operation of the battery pack 2 to some extent.

It can be understood that whether the heater 83 is provided is not limited in this embodiment of this disclosure.

In an embodiment, the charging current converter 4 is located inside the cabinet 1.

In the solution of this embodiment of this disclosure, arranging the charging current converter 4 inside the cabinet 1 can alleviate the influence of the external environment on the charging current converter 4, and allow the energy storage device to be transferred more conveniently.

It can be understood that this embodiment of this disclosure is not limited to the case in which the charging current converter 4 is located inside the cabinet 1. For example, the charging current converter 4 is disposed outside the cabinet 1.

In an embodiment, the charging connector 5 is partially located outside the cabinet 1.

In the solution of this embodiment of this disclosure, arranging the charging connector 5 partially outside the cabinet 1 allows the user to conveniently move the charging connector 5 to charge an electric device.

In an embodiment, the charging current converter 4 is a direct-current converter.

The direct-current converter refers to a current converter that inputs and outputs direct current.

In the solution of this embodiment of this disclosure, since the current new energy vehicles and other electric devices are mostly charged through direct current, parameters of the current outputted by the battery pack 2 can be adjusted through the direct-current converter to adapt to input current parameters of more electric devices. The energy storage device has high adaptability.

For example, the energy storage current converter 3 is an alternating-current converter.

For example, the energy storage device further includes a plurality of temperature and pressure sensors. The temperature adjustment flow channel of the battery pack 2, the temperature adjustment flow channel of the energy storage current converter 3, the cooling flow channel of the charging current converter 4, and the cooling flow channel of the charging connector 5 are both provided with the temperature and pressure sensors.

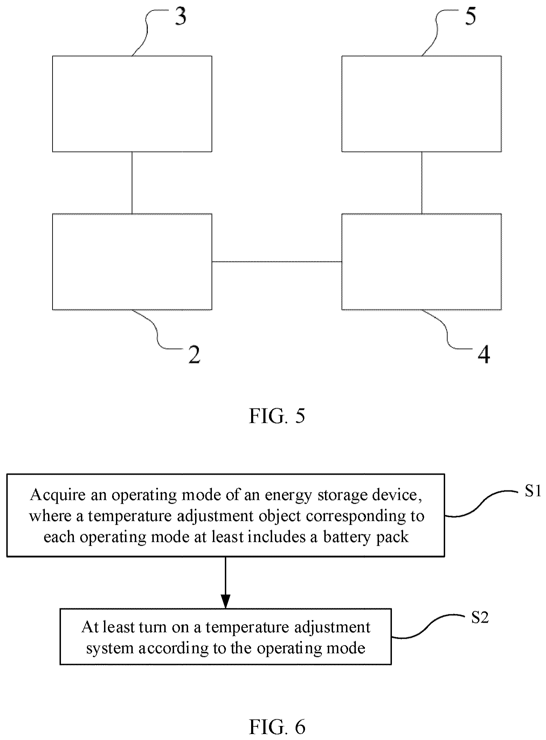

An embodiment of this disclosure further provides a temperature adjustment method for energy storage device. Referring to FIG. 6 to FIG. 12, the temperature adjustment method includes the following steps.

Step S1. Acquire an operating mode of the energy storage device, where a temperature adjustment object corresponding to each operating mode at least includes a battery pack.

Step S2. At least turn on a temperature adjustment system according to the operating mode.

For example, the temperature adjustment system is configured to exchange heat with an energy storage current converter 3 and the battery pack 2. A cooling system 6 and a temperature adjustment system 8 are thermally separated. The cooling system 6 is configured to exchange heat with a charging current converter 4 and a charging connector 5. A first heat dissipation apparatus 7 is disposed in the cooling system 6. A second heat dissipation apparatus 9 is disposed in the temperature adjustment system 8. The energy storage current converter 3 is electrically connected to both the battery pack 2 and an energy storage interface. The charging current converter 4 is electrically connected to both the battery pack 2 and the charging connector 5. When the operating mode is a first operating mode for charging the battery pack 2, the cooling system 6 is in an off state, and the temperature adjustment system 8 is in an on state; when the operating mode is a second operating mode in which the battery pack 2 discharges to the charging connector 5 through the charging current converter 4, the cooling system 6 and the temperature adjustment system 8 are both in the on state; and when the operating mode is a dormant mode, the cooling system 6 is in the off state, and the temperature adjustment system 8 is in the on state.

The dormant mode refers to an operating mode in which the battery pack 2, the charging current converter 4, and the charging connector 5 are all in the off state.

In the solution of this embodiment of this disclosure, the at least turning on a temperature adjustment system 8 according to the operating mode can implement temperature adjustment for the charging current converter 4, the charging connector 5, and the battery pack 2 based on the actual requirements on the operating mode. During the operation of the energy storage apparatus, there are situations where the charging current converter 4 and the battery pack 2 need to be cooled. Since the temperatures of the cooling mediums required by the charging current converter 4 and the battery pack 2 in actual application scenarios are significantly different, the first heat dissipation apparatus 7 and the second heat dissipation apparatus 9 can be respectively adjusted through the cooling system 6 and the temperature adjustment system 8 based on different cooling requirements, thereby fully utilizing the heat dissipation apparatuses for cooling the charging current converter 4 and the battery pack 2 in the energy storage apparatus. Moreover, the first heat dissipation apparatus 7 is used to cool the cooling system 6, and the second heat dissipation apparatus 9 is used to adjust the temperature of the temperature adjustment system 8. The temperature adjustment fluid in the cooling system 6 and the temperature adjustment fluid in the temperature adjustment system 8 can have a significant temperature difference, allowing the energy storage device to have lower energy consumption while basically meeting the overall temperature adjustment requirements.

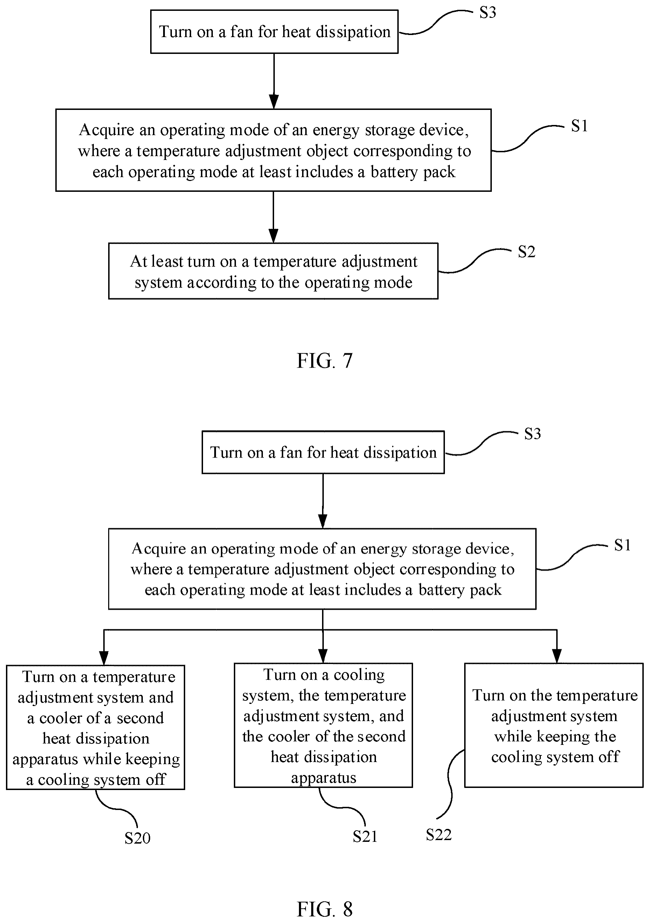

In an embodiment, referring to FIG. 8, the operating mode is the first operating mode for charging the battery pack 2, and the at least turning on a temperature adjustment system 8 according to the operating mode includes the following step.

Step S20. Turn on the temperature adjustment system and a cooler of the second heat dissipation apparatus while keeping the cooling system off.

In the solution of this embodiment of this disclosure, during charging of the battery pack 2, the battery pack 2 generates a large amount of heat while operating, but the temperature of the cooling medium required by the battery pack 2 is lower than the ambient temperature. The battery pack 2 can be well cooled by turning on the cooler 90 and the third circulating pump 81.

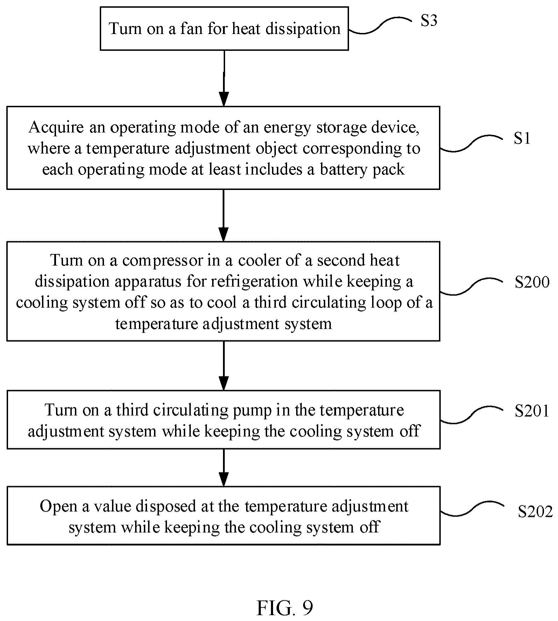

In an embodiment, referring to FIG. 9, the temperature adjustment object corresponding to the first operating mode further includes an energy storage current converter 3, and the turning on the temperature adjustment system 8 and a cooler 90 of the second heat dissipation apparatus 9 while keeping the cooling system 6 off includes the following steps.

Step S200. Turn on a compressor in the cooler of the second heat dissipation apparatus for refrigeration while keeping the cooling system off so as to cool a third circulating loop of the temperature adjustment system.

Step S201. Turn on the third circulating pump in the temperature adjustment system while keeping the cooling system off.

For example, a temperature adjustment flow channel of the battery pack 2 and the third circulating pump 81 are connected in series with the third circulating loop 80 of the temperature adjustment system 8; the second heat dissipation apparatus 9 is disposed in the third circulating loop 80; a temperature adjustment flow channel of the energy storage current converter 3 is disposed in a second pipeline 82 of the temperature adjustment system 8; the second pipeline 82 is connected in parallel with the temperature adjustment flow channel of the battery pack 2; and the second pipeline 82 is connected in series with the third circulating pump 81.

In the solution of this embodiment of this disclosure, the second pipeline 82 is connected in parallel with the temperature adjustment flow channel of the battery pack 2. The flow rates of the cooling mediums in the second pipeline 82 and the temperature adjustment flow channel of the battery pack 2 can be adjusted adaptively based on actual temperature adjustment requirements.

It can be understood that a temperature adjustment manner for the energy storage current converter 3 is not limited in this disclosure. For example, the temperature adjustment flow channel of the energy storage current converter 3 is disposed in the third circulating loop 80.

In an embodiment, referring to FIG. 9, the turning on the temperature adjustment system 8 and a cooler 90 of the second heat dissipation apparatus 9 while keeping the cooling system 6 off further includes the following step.

Step S202. Open a valve disposed at the temperature adjustment system while keeping the cooling system off.

For example, the valve 12 and the temperature adjustment flow channel of the energy storage current converter 3 are connected in series with the second pipeline 82 of the temperature adjustment system 8.

In this embodiment of this disclosure, the valve 12 is disposed in the second pipeline 82 of the temperature adjustment system 8. The valve 12 can be closed to stop the cooling medium from flowing through the temperature adjustment flow channel of the energy storage current converter 3, so that a temperature adjustment pressure from the second heat dissipation apparatus 9 to the temperature adjustment system 8 is relieved when the energy storage current converter 3 does not need temperature adjustment, thereby reducing energy consumption to some extent.

It can be understood that whether the valve 12 is provided in the second pipeline 82 is not limited in this disclosure.

In an embodiment, referring to FIG. 8, the operating mode is a second operating mode in which the battery pack 2 discharges to the charging connector 5 through the charging current converter 4; the temperature adjustment object corresponding to the second operating mode further includes the charging connector 5 and the charging current converter 4; and the at least turning on a temperature adjustment system 8 according to the operating mode includes the following step.

Step S21. Turn on the cooling system, the temperature adjustment system, and the cooler of the second heat dissipation apparatus.

In the solution of this embodiment of this disclosure, during charging and discharging of the battery pack 2 through the charging current converter 4, the charging connector 5, the charging current converter 4, and the battery pack 2 are all in an operating state and generate a certain amount of heat. Based on actual use requirements, the temperature of the cooling medium required by the charging connector 5 is approximate to the temperature of the cooling medium required by the charging current converter 4. Temperature adjustment can be well performed through the cooling system 6, the temperature adjustment system 8, and the cooler 90.

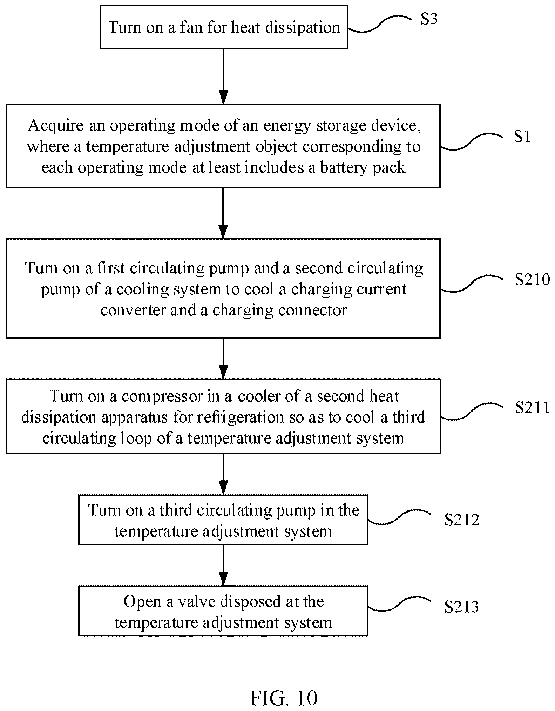

In an embodiment, referring to FIG. 10, the temperature adjustment object corresponding to the second operating mode further includes an energy storage current converter 3, and the turning on the cooling system 6, the temperature adjustment system 8, and the cooler 90 of the second heat dissipation apparatus 9 includes the following steps.

Step S210. Turn on the first circulating pump and the second circulating pump of the cooling system to cool the charging current converter and the charging connector.

Step S211. Turn on the compressor in the cooler of the second heat dissipation apparatus for refrigeration so as to cool the third circulating loop of the temperature adjustment system.

Step S212. Turn on the third circulating pump in the temperature adjustment system.

For example, a heat dissipation flow channel corresponding to the second heat dissipation apparatus 9, a temperature adjustment flow channel of the battery pack 2, and the third circulating pump 81 are connected in series with the third circulating loop 80 of the temperature adjustment system 8; a temperature adjustment flow channel of the energy storage current converter 3 is disposed in a second pipeline 82 of the temperature adjustment system 8; the second pipeline 82 is connected in parallel with the temperature adjustment flow channel of the battery pack 2; and the second pipeline 82 is connected in series with the third circulating pump 81.

In the solution of this embodiment of this disclosure, the temperature of the cooling medium required by the battery pack 2 is approximate to the temperature of the cooling medium required by the energy storage current converter 3. Shared use of the temperature adjustment system 8 by the battery pack 2 and the energy storage current converter 3 can realize better utilization of cooling capacities of a heat dissipation system and the second heat dissipation apparatus 9.

In an embodiment, referring to FIG. 10, the turning on the cooling system 6, the temperature adjustment system 8, and the cooler 90 of the second heat dissipation apparatus 9 further includes the following step.

Step S213. Open a valve disposed at the temperature adjustment system 8.

For example, the valve 12 and the temperature adjustment flow channel of the energy storage current converter 3 are connected in series with the second pipeline 82 of the temperature adjustment system 8.

In the solution of this embodiment of this disclosure, the valve 12 is disposed in the second pipeline 82 of the temperature adjustment system 8. The valve 12 can be closed to stop the cooling medium from flowing through the temperature adjustment flow channel of the energy storage current converter 3, so that a temperature adjustment pressure from the second heat dissipation apparatus 9 to the temperature adjustment system 8 is relieved when the energy storage current converter 3 does not need temperature adjustment, thereby reducing energy consumption to some extent.

It can be understood that this embodiment of this disclosure is not limited to turning on the first circulating pump 11, the second circulating pump 612, the cooler 90, the third circulating pump 81, and the valve 12 to cool the charging current converter 4, the charging connector 5, the battery pack 2, and the energy storage current converter 3. For example, the battery pack 2 and the energy storage current converter 3 are both disposed in the cooling system 6. The first circulating pump 11 and the second circulating pump 612 are turned on to cool the charging current converter 4, the charging connector 5, the battery pack 2, and the energy storage current converter 3.

In an embodiment, referring to FIG. 8, when the operating mode is a dormant mode, the at least turning on a temperature adjustment system 8 according to the operating mode includes the following step.

Step S22. Turn on the temperature adjustment system while keeping the cooling system off.

The dormant mode refers to an operating mode in which the battery pack 2, the charging current converter 4, and the charging connector 5 are all in the off state.

For example, when the energy storage device includes the energy storage current converter 3 and the energy storage device is in the dormant mode, the energy storage current converter 3 is also in the off state.

In the solution of this embodiment of this disclosure, when the operating mode is a dormant mode, the cooling system 6 is turned off and the temperature adjustment system 8 is turned on. When the operating mode is a dormant mode, none of the battery pack 2, the charging connector 5, and the charging current converter 4 operates. However, the battery pack 2 has a specified temperature requirement while being turned on, and long-term exposure of the battery pack 2 to inappropriate temperatures affects the service life of the battery pack 2. The battery pack 2 can be adjusted to an appropriate temperature by turning on the temperature adjustment system 8.

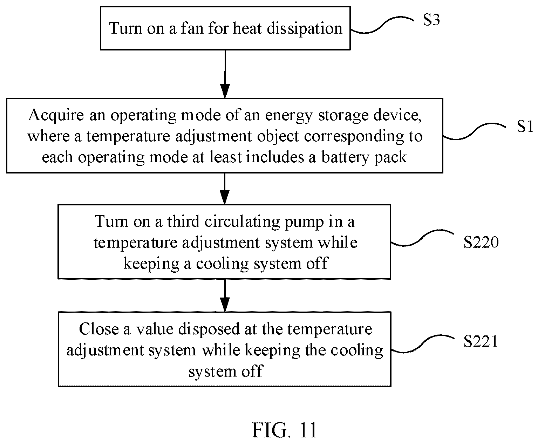

In an embodiment, referring to FIG. 11, the turning on the temperature adjustment system 8 while keeping the cooling system 6 off includes the following steps.

Step S220. Turn on the third circulating pump in the temperature adjustment system while keeping the cooling system off.

Step S221. Close the valve disposed at the temperature adjustment system while keeping the cooling system off.

For example, the temperature adjustment flow channel of the battery pack 2 and the third circulating pump 81 are connected in series with the third circulating loop 80 of the temperature adjustment system 8, and the second heat dissipation apparatus is disposed in the third circulating loop 80.

For example, the valve 12 and the temperature adjustment flow channel of the energy storage current converter 3 are connected in series with the second pipeline 82 of the temperature adjustment system 8. The second pipeline 82 is connected in parallel with the temperature adjustment flow channel of the battery pack 2, and the second pipeline 82 is connected in series with the third circulating pump 81.

In the solution of this embodiment of this disclosure, when the operating mode is a dormant mode, the cooling system 6 is turned off and the temperature adjustment system 8 is turned on. When the operating mode is a dormant mode, none of the battery pack 2, the charging connector 5, and the charging current converter 4 operates. However, the battery pack 2 has a specified temperature requirement while being turned on, and long-term exposure of the battery pack 2 to inappropriate temperatures affects the service life of the battery pack 2. The battery pack 2 can be adjusted to an appropriate temperature by turning on the temperature adjustment system 8.

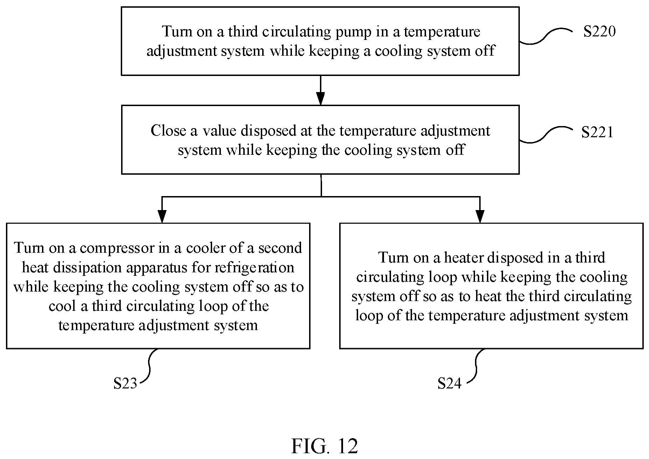

In an embodiment, referring to FIG. 12, the temperature adjustment method further includes the following step.

Step S23. Turn on the compressor in the cooler of the second heat dissipation apparatus for refrigeration while keeping the cooling system off so as to cool the third circulating loop of the temperature adjustment system.

In the solution of this embodiment of this disclosure, when the ambient temperature is higher than the normal start temperature of the battery pack 2, the compressor 900 in the cooler 90 of the second heat dissipation apparatus 9 can be turned on for refrigeration, to enable the temperature of the battery pack 2 to be approximate to the normal operating temperature.

In an embodiment, referring to FIG. 12, the temperature adjustment method further includes the following step.

Step S24. Turn on a heater disposed in the third circulating loop while keeping the cooling system off so as to heat the third circulating loop of the temperature adjustment system.

In the solution of this embodiment of this disclosure, when the ambient temperature is lower than the normal start temperature of the battery pack 2, the heater 83 disposed in the third circulating loop 80 can be turned on to heat the cooling medium in the third circulating loop 80, to enable the temperature of the battery pack 2 to be approximate to the normal operating temperature.

It can be understood that the operating state of the third circulating pump 81 when the operating mode is in a dormant mode is not limited in this embodiment of this disclosure. The third circulating pump 81 may be in an on state or an off state.

In an embodiment, referring to FIG. 6, the temperature adjustment method further includes the following step.

Step S3. Turn on a fan for heat dissipation.

For example, the fan 10 is installed in the cabinet 1.

In the solution of this embodiment of this disclosure, the fan 10 is turned on to cool the first heat dissipation apparatus 7 and the second heat dissipation apparatus 9 and to drive the air to flow quickly, such that the heat in the energy storage device is quickly taken away from the cabinet 1, allowing for a large cooling capacity of the energy storage apparatus.

The foregoing descriptions are merely preferred embodiments of this disclosure and are not intended to limit this disclosure. For persons skilled in the art, various modifications and changes may be made to this disclosure. Any modification, equivalent replacement, and improvement made without departing from the spirit and principle of this disclosure shall fall within the protection scope of this disclosure.

## Claims

1. An energy storage device, wherein the energy storage device at least has a first operating mode, a second operating mode, and a dormant mode and comprises:
a cabinet, comprising an energy storage interface;
a battery pack installed inside the cabinet, wherein the battery pack is electrically connected to the energy storage interface;
a charging current converter, electrically connected to the battery pack to convert electrical energy inputted into or outputted from the battery pack;
a charging connector, electrically connected to the charging current converter to transfer the electrical energy converted by the charging current converter;
a cooling system, configured to exchange heat with the charging current converter and the charging connector;
a first heat dissipation apparatus, disposed in the cooling system;
a temperature adjustment system, configured to exchange heat with the battery pack, wherein the cooling system and the temperature adjustment system are thermally separated;
a second heat dissipation apparatus, disposed in the temperature adjustment system; and
a controller, configured to keep the cooling system off and turn on the temperature adjustment system in the first operating mode, wherein the controller is configured to turn on the cooling system and the temperature adjustment system in the second operating mode, and the controller is configured to keep the cooling system off and turn on the temperature adjustment system in the dormant mode.

2. The energy storage device according to claim 1, wherein the first heat dissipation apparatus is a cooling container for accommodating a cooling medium; a space in the cooling container for accommodating the cooling medium is provided in the cooling system; the cooling container exchanges heat with air; the second heat dissipation apparatus comprises a cooler and a first heat exchanger; and the first heat exchanger spans between the cooler and the temperature adjustment system.

3. The energy storage device according to claim 2, wherein the cooler comprises a compressor, a condenser, an expansion valve, and an evaporator that are sequentially connected head to tail; and the first heat exchanger spans between the evaporator and the temperature adjustment system.

4. The energy storage device according to claim 3, wherein the energy storage device further comprises at least one fan; the fan is installed in the cabinet; the fan is configured to cool the condenser and the cooling container; and in a projection in an air outlet direction of the fan, a projection region of the condenser and a projection region of the cooling container are staggered.

5. The energy storage device according to claim 4, wherein in the projection in the air outlet direction of the fan, a projection region of each fan spans between the projection region of the condenser and the projection region of the cooling container.

6. The energy storage device according to claim 4 or 5, wherein the condenser and the cooling container are both located above the battery pack, and/or the condenser and the cooling container are both located above the fan.

7. The energy storage device according to any one of claims 1 to 6, wherein the energy storage device further comprises a first circulating pump; and the cooling system comprises:
a first circulating loop, wherein the first circulating pump and a cooling flow channel of the charging current converter are both connected in series with the first circulating loop; and
a cooling sub-system, wherein a cooling flow channel of the charging connector is disposed in the cooling sub-system; the cooling sub-system comprises a first pipeline; the first pipeline is connected in series with the first circulating pump; the first pipeline is connected in parallel with the cooling flow channel of the charging current converter; and the first heat dissipation apparatus is disposed in at least one of the first circulating loop and the cooling sub-system to cool the charging connector and the charging current converter.

8. The energy storage device according to claim 7, wherein the cooling sub-system further comprises a second heat exchanger, a second circulating pump, and a second circulating loop; one heat exchange flow channel of the second heat exchanger is disposed in the first pipeline; the cooling flow channel of the charging connector, the second circulating pump, and another heat exchange flow channel of the second heat exchanger are connected in series with the second circulating loop; the second circulating loop is isolated from the first pipeline; and the first heat dissipation apparatus is disposed in at least one of the first circulating loop, a heat exchange channel of the second heat exchanger, and the second circulating loop.

9. The energy storage device according to any one of claims 1 to 8, wherein the temperature adjustment system comprises a third circulating loop and a third circulating pump; a temperature adjustment flow channel of the battery pack and the third circulating pump are connected in series with the third circulating loop; and the second heat dissipation apparatus is disposed in the third circulating loop.

10. The energy storage device according to claim 9, wherein the energy storage device further comprises an energy storage current converter; the energy storage current converter is electrically connected to both the battery pack and the energy storage interface to convert electrical energy inputted into or outputted from the battery pack; the temperature adjustment system further comprises a second pipeline; the second pipeline is connected in parallel with the temperature adjustment flow channel of the battery pack; the second pipeline is connected in series with the third circulating pump; and the temperature adjustment flow channel of the energy storage current converter is disposed in the second pipeline.

11. The energy storage device according to claim 10, wherein the energy storage device further comprises a valve; and the valve and the temperature adjustment flow channel of the energy storage current converter are connected in series with the second pipeline.

12. The energy storage device according to any one of claims 9 to 11, wherein the temperature adjustment system further comprises a heater, and the heater is disposed in the third circulating loop.

13. A temperature adjustment method for an energy storage device, comprising:
acquiring an operating mode of the energy storage device, wherein a temperature adjustment object corresponding to each operating mode at least comprises a battery pack; and
at least turning on a temperature adjustment system according to the operating mode, wherein the temperature adjustment system is configured to exchange heat with the battery pack; a cooling system and the temperature adjustment system are thermally separated; the cooling system is configured to exchange heat with a charging current converter and a charging connector; a first heat dissipation apparatus is disposed in the cooling system; a second heat dissipation apparatus is disposed in the temperature adjustment system; the charging current converter is electrically connected to both the battery pack and the charging connector; when the operating mode is a first operating mode for charging the battery pack, the cooling system is in an off state, and the temperature adjustment system is in an on state; when the operating mode is a second operating mode in which the battery pack discharges to the charging connector through the charging current converter, the cooling system and the temperature adjustment system are both in the on state; and when the operating mode is a dormant mode, the cooling system is in the off state, and the temperature adjustment system is in the on state.

14. The temperature adjustment method according to claim 13, wherein the operating mode is the first operating mode for charging the battery pack, and the at least turning on a temperature adjustment system according to the operating mode comprises:
turning on the temperature adjustment system and a cooler of the second heat dissipation apparatus while keeping the cooling system off.

15. The temperature adjustment method according to claim 14, wherein a temperature adjustment object corresponding to the first operating mode further comprises an energy storage current converter, and the turning on the temperature adjustment system and a cooler of the second heat dissipation apparatus while keeping the cooling system off comprises:
turning on a compressor in the cooler of the second heat dissipation apparatus for refrigeration while keeping the cooling system off so as to cool a third circulating loop of the temperature adjustment system; and
turning on a third circulating pump in the temperature adjustment system while keeping the cooling system off, wherein a temperature adjustment flow channel of the battery pack and the third circulating pump are connected in series with the third circulating loop of the temperature adjustment system; the second heat dissipation apparatus is disposed in the third circulating loop; a temperature adjustment flow channel of the energy storage current converter is disposed in a second pipeline of the temperature adjustment system; the second pipeline is connected in parallel with the temperature adjustment flow channel of the battery pack; and the second pipeline is connected in series with the third circulating pump.

16. The temperature adjustment method according to claim 15, wherein the turning on the temperature adjustment system and a cooler of the second heat dissipation apparatus while keeping the cooling system off further comprises:
opening a valve disposed at the temperature adjustment system while keeping the cooling system off, wherein the valve and the temperature adjustment flow channel of the energy storage current converter are connected in series with the second pipeline of the temperature adjustment system.

17. The temperature adjustment method according to any one of claims 13 to 16, wherein the operating mode is a second operating mode in which the battery pack discharges to the charging connector through the charging current converter; the temperature adjustment object corresponding to the second operating mode further comprises the charging connector and the charging current converter; and the at least turning on a temperature adjustment system according to the operating mode comprises:
turning on the cooling system, the temperature adjustment system, and the cooler of the second heat dissipation apparatus.

18. The temperature adjustment method according to claim 17, wherein the temperature adjustment object corresponding to the second operating mode further comprises an energy storage current converter, and the turning on the cooling system, the temperature adjustment system, and the cooler of the second heat dissipation apparatus comprises:
turning on a first circulating pump and a second circulating pump of the cooling system to cool the charging current converter and the charging connector;
turning on a compressor in the cooler of the second heat dissipation apparatus for refrigeration so as to cool a third circulating loop of the temperature adjustment system; and
turning on a third circulating pump in the temperature adjustment system, wherein a temperature adjustment flow channel of the battery pack and the third circulating pump are connected in series with the third circulating loop of the temperature adjustment system; the second heat dissipation apparatus is disposed in the third circulating loop; a temperature adjustment flow channel of the energy storage current converter is disposed in a second pipeline of the temperature adjustment system; the second pipeline is connected in parallel with the temperature adjustment flow channel of the battery pack; and the second pipeline is connected in series with the third circulating pump.

19. The temperature adjustment method according to claim 18, wherein the turning on the cooling system, the temperature adjustment system, and the cooler of the second heat dissipation apparatus further comprises:
opening a valve disposed at the temperature adjustment system, wherein the valve and the temperature adjustment flow channel of the energy storage current converter are connected in series with the second pipeline of the temperature adjustment system.

20. The temperature adjustment method according to any one of claims 13 to 19, wherein the operating mode is a dormant mode, and the at least turning on a temperature adjustment system according to the operating mode comprises:
turning on the temperature adjustment system while keeping the cooling system off.

21. The temperature adjustment method according to claim 20, wherein the turning on the temperature adjustment system while keeping the cooling system off comprises:
turning on a third circulating pump in the temperature adjustment system while keeping the cooling system off, wherein a temperature adjustment flow channel of the battery pack and the third circulating pump are connected in series with the third circulating loop of the temperature adjustment system, and the second heat dissipation apparatus is disposed in the third circulating loop; and
closing a valve disposed at the temperature adjustment system while keeping the cooling system off, wherein the valve and the temperature adjustment flow channel of the energy storage current converter are connected in series with the second pipeline of the temperature adjustment system, the second pipeline is connected in parallel with the temperature adjustment flow channel of the battery pack, and the second pipeline is connected in series with the third circulating pump.

22. The temperature adjustment method according to claim 21, wherein the temperature adjustment method further comprises:
turning on a compressor in the cooler of the second heat dissipation apparatus for refrigeration while keeping the cooling system off so as to cool the third circulating loop of the temperature adjustment system.

23. The temperature adjustment method according to claim 21 or 22, wherein the temperature adjustment method further comprises:
turning on a heater disposed in the third circulating loop while keeping the cooling system off so as to heat the third circulating loop of the temperature adjustment system.

24. The temperature adjustment method according to any one of claims 13 to 23, wherein the temperature adjustment method further comprises:
turning on a fan for heat dissipation.
